# EUROPEAN PATENT SPECIFICATION

(11) **EP 2 680 337 B1**
(45) Date of publication and mention of the grant of the patent: **07.06.2017**
(21) Application number: 12193756.9
(22) Date of filing: 22.11.2012
(51) Int. Cl.: H01M 2/02, H01M 10/052

(54) **Rechargeable battery**
Wiederaufladbare Batterie
Batterie rechargeable

(30) Priority: 25.06.2012 US 201261663869 P; 07.11.2012 US 201213670582
(43) Date of publication of application: 01.01.2014
(73) Proprietor: Samsung SDI Co., Ltd., Gyeonggi-do (KR)
(72) Inventor: LEE, Sang-Joo, Gyeonggi-do (KR); YOON, Heui-Sang, Gyeonggi-do (KR)
(74) Representative: Taor, Simon Edward William

(56) References cited:
- EP-A1- 1 760 803
- EP-A2- 1 772 914
- DE-A1-102009 037 726
- US-A1- 2010 297 494
- US-A1- 2011 183 189

## Description

The described technology relates generally to a rechargeable battery. More particularly, the described technology relates generally to a rechargeable battery having a lower support structure.

In general, secondary batteries may be charged or discharged, unlike a primary battery, which may not be charged. A rechargeable battery with low capacity is often used for a small portable electronic device such as a mobile phone, a laptop computer, and a camcorder, while a rechargeable battery with large capacity is typically used as a power source for driving a motor such as for a hybrid vehicle.

Rechargeable batteries generally use lithium-based oxides as positive active materials, and use carbon materials as negative active materials. Secondary batteries may be classified into a liquid electrolyte battery and a polymer electrolyte battery according to the type of electrolyte. In general, a battery using a liquid electrolyte is referred to as a lithium ion battery, and a battery using a polymer electrolyte is referred to as a polymer battery.

Such a rechargeable battery includes a pouch-type case and an electrode assembly inserted into the case and including a separator interposed between a negative electrode and a positive electrode.

If the rechargeable battery undergoes a shock (for example it is dropped), the electrodes can move into a space between the bottom of the case and the electrode assembly, thereby short-circuiting between the positive electrode and the negative electrode.

US2010297494 discloses a battery module includes a battery cell, a flexible shell and a supporting seat. The battery cell has a main body and two electrodes extended outwardly from the main body. The flexible shell has an upper and lower lid plates, and the supporting seat is provided for arranging the flexible shell.

US2011183189 discloses a package for a battery cell that includes a first sheet having a coating layer disposed thereon, a second sheet having a coating layer disposed thereon, the first sheet and the second sheet cooperating to form a cavity to receive the battery cell therein, and a frame disposed adjacent a portion of at least one of the first sheet and the second sheet, wherein the frame is coupled to at least one of the first sheet and the second sheet.

DE 10 2009 037726 discloses a galvanic cell that is sealed by a frame.

The above information disclosed in this Background section is only for enhancement of understanding of the background of the described technology and therefore it may contain information that does not form the prior art that is already known in this country to a person of ordinary skill in the art.

The described technology has been made in an effort to provide a rechargeable battery having a protective circuit module, which can be stably bonded to a case.

An exemplary embodiment provides a rechargeable battery including: an electrode assembly including a positive electrode and a negative electrode; and a case having a space for housing the electrode assembly, wherein a protrusion is formed on at least one edge of the bottom surface of the case, and a recess is formed inside the protrusion. According to an embodiment, the protrusion formed by bending the case and the recess formed inside the protrusion contribute to prevent internal short-circuiting caused by the movement of the electrode assembly.

According to an aspect of the invention, there is provided a rechargeable battery as set out in claim 1.

Hence, the shape of the second end of the pouch type case is maintained by the presence of the support member. Therefore, the second end will be prevented from deforming if the rechargeable battery undergoes shocks, which helps to prevent short circuits.

In some embodiments, the recessed portion is arranged to prevent movement of the electrode assembly within the case.

In some embodiments, the case comprises four sides, wherein the protrusion portion is formed around edge regions of three of the four sides of the second end of the case.

In some embodiments, the protrusion portion is folded so that one side of the protrusion portion is adjacent the second end of the case, wherein the support member is adjacent an opposite side of the protrusion portion.

In some embodiments, the recessed portion is arranged in a central region of second end of the case and extends to an edge region of the second end of the case.
In some embodiments, the support member is located within the recessed portion.
In some embodiments, the support member comprises a tape.

In some embodiments, the rechargeable battery further comprises a buffer member located between the support member and the second end of the case, wherein the buffer member is arranged to absorb impacts. In some embodiments, the buffer member is located within the recessed portion. In some embodiments, the buffer member comprises a tape.
In some embodiments, the rechargeable battery further comprises a finishing tape attached to an outside surface of the case, wherein the finishing tape is located between the buffer member and the support member, wherein the finishing tape is arranged to fix the buffer member in place.

In some embodiments, the rechargeable battery further comprises a protective circuit module adjacent the first end of the case, wherein the protective circuit module is connected to the electrode tabs.

In some embodiments, the case is made of a synthetic resin film, or a laminate film formed of a synthetic resin film with a metal thin film inserted therein.
FIG. 1 is an exploded perspective view of a rechargeable battery according to a first embodiment of the present invention;
FIG. 2 is a cross-sectional view of the rechargeable battery according to the first embodiment of the present invention;
FIG. 3 is an exploded perspective view of the rechargeable battery according to the first embodiment of the present invention, when viewed from the bottom;
FIG. 4 is a perspective view illustrating a part of a rechargeable battery according to a second embodiment of the present invention;
FIG. 5 is a cross-sectional view of the rechargeable battery according to the second embodiment of the present invention;
FIG. 6 is an exploded perspective view illustrating a part of a rechargeable battery according to a third embodiment of the present invention;
FIG. 7 is a cross-sectional view of the rechargeable battery according to the third embodiment of the present invention;
FIG. 8 is an exploded perspective view illustrating a part of a rechargeable battery according to a third embodiment of the present invention; and
FIG. 9 is a cross-sectional view of the rechargeable battery according to the fourth embodiment of the present invention.

In the following detailed description, only certain exemplary embodiments of the present invention have been shown and described, simply by way of illustration. As those skilled in the art would realize, the described embodiments may be modified in various different ways, all without departing from the scope of the present invention. Like reference numerals designate like elements throughout the specification.

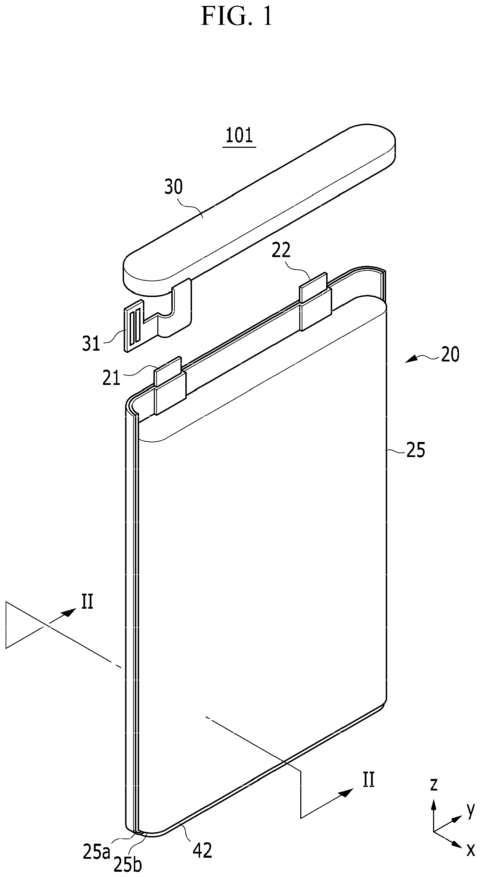

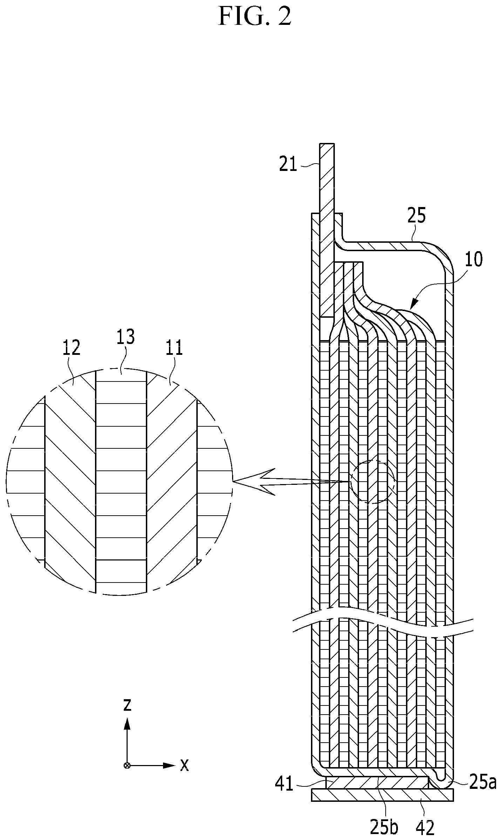

FIG. 1 is an exploded perspective view of a rechargeable battery according to a first embodiment of the present invention. FIG. 2 is a cross-sectional view of the rechargeable battery according to the first embodiment of the present invention.

Referring to FIG. 1 and FIG. 2, the rechargeable battery 101 according to the present embodiment includes an electrode assembly 10, a case 25 for housing the electrode assembly 10, a protective circuit module 30 coupled to the top of the case 25, and a support member 42 coupled to the bottom of the case 25.

The electrode assembly 10 is formed by winding the positive electrode 11, the negative electrode 12, and a separator 13 interposed between the positive electrode 11 and the negative electrode 12, or by stacking the positive and negative electrodes, with the separator positioned therebetween. A positive terminal 21 is coupled to the positive electrode 11, and a negative terminal 22 is coupled to the negative electrode 12. The positive terminal 21 and negative terminal 22 form electrode tabs that protrude from the top (i.e. a first end) of the case 25. It will be appreciated that the case 25 could be orientated in a number of different ways and that references to the "top" and "bottom" of the case 25 are purely to aid understanding.

The rechargeable battery according to the present embodiment comprises a lithium battery, or may comprise a lithium polymer battery. In other embodiments, other types of rechargeable battery could be used.

The case 25 is formed as a flexible pouch type case, and the case 25 may be made of a synthetic resin film, or a laminate film formed of a synthetic resin film with a metal thin film inserted therein. Although not shown, a label and a metal cover may be further provided on the case 25.

In this embodiment, the protective circuit module 30 is placed on the top of the case 25, and coupled to the positive terminal 21 and the negative terminal 22. The protective circuit module 30 has a circuit board having a protection element provided therein to control the charging and discharging and other operations of the battery. Moreover, an external terminal 31 is provided at protective circuit module 30.

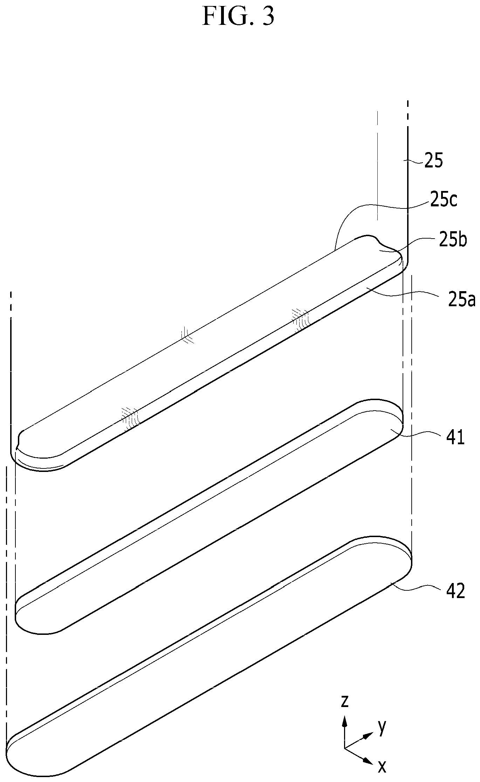

FIG. 3 is an exploded perspective view of the rechargeable battery according to the first embodiment of the present invention, when viewed from the bottom (the bottom of the case 25 in this embodiment being a second end of the case 25 opposite to the first end proximate to which the electrode tabs are located).

Referring to FIG. 2 and FIG. 3, a protrusion 25a and a recess 25b positioned inside the protrusion 25a are formed on the bottom surface of the case 25. The protrusion 25a extends downwardly from the bottom surface of the case 25 (i.e. away from the second end of the case 25), and extends along the bottom edge of the case 25. In this embodiment, the protrusion 25a protrudes from three edges of the bottom surface of the case 25, and an opening 25c with no protrusion is formed on one edge of the bottom surface of the case 25.

In this embodiment, the protrusion 25a is formed by bending a film material positioned at the bottom of the case 25. A surplus portion protruded in the formation of the case 25 is positioned at the bottom of the case 25. Such a surplus portion is necessarily formed owing to the characteristics of the pouch case while forming a flat pouch in a hexahedral shape. If a surplus portion exists, the electrode assembly 10 can move into the space formed by the surplus portion, and thus internal short-circuiting may occur.

However, by pressing and flattening the center of the bottom at which such a surplus portion is formed and forming the protrusion 25a along the three edges, as shown in the present embodiment, the recess 25b is formed inward of the protrusion 25a. In other words, by forming the protrusion 25a as mentioned above, the recess 25b is formed. It will be appreciated that in other embodiments, a recess in the bottom (i.e. second end) of the case could be formed by other means.

In this embodiment, a buffer member 41 is inserted into the recess 25b. The buffer member 41 is formed in a longitudinal plate-like shape which extends in the lengthwise direction (y-axis direction of FIG. 3) of the bottom surface of the case 25. The buffer member 41 may be made of polymer which has elasticity so as to absorb an impact. Moreover, the buffer member 41 is a tape with an adhesive layer formed on one surface. Therefore, the buffer member 41 is stably attached to the case 25 and absorbs an impact an impact transferred to the case 25. In other embodiments, a buffer member 41 can be located between the support member 42 and the second end of the case 40 in other ways, with the buffer member 41 arranged to absorb impacts.

In this embodiment, the support member 42 is attached to the bottom of the buffer member 41. In this embodiment, the support member 42 is a tape with an adhesive layer formed on one surface. The support member 42 is attached to the bottom surface of the buffer member 41, and serves to maintain the shape of the case 25 and prevent the movement of the electrode assembly 10 provided within the case 25.

Hence, the shape of the second end of the pouch type case 25 is maintained by the presence of the support member 42. Therefore, the second end will be prevented from deforming if the rechargeable battery undergoes shocks, which helps to prevent short circuits.

By providing the buffer member 41 in the recess 25b and providing the support member 42, as in the present embodiment, the electrode assembly 10 is prevented from moving due to the surplus portion formed at the bottom of the case 25, and accordingly preventing internal short-circuiting caused by the movement of the electrode assembly 10. Moreover, the buffer member 41 can absorb an external impact or vibration.

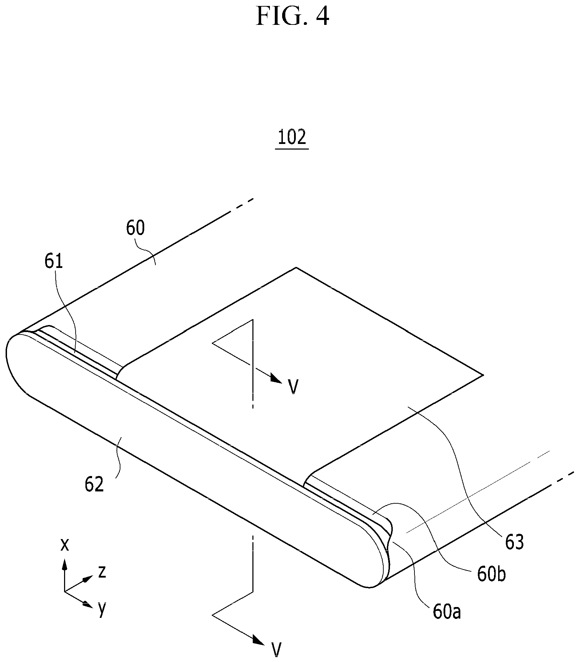

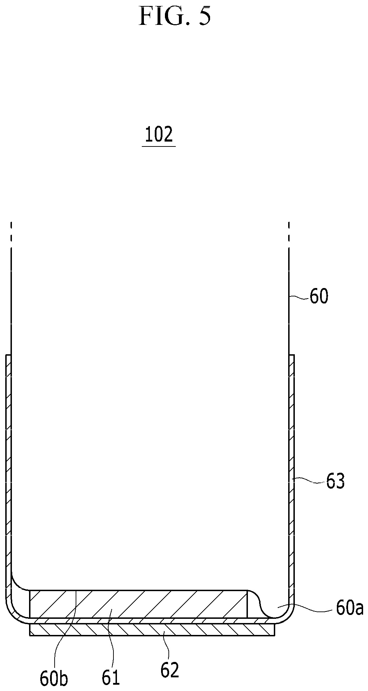

FIG. 4 is a perspective view illustrating a part of a rechargeable battery according to a second embodiment of the present invention. FIG. 5 is a cross-sectional view of the rechargeable battery according to the second embodiment of the present invention.

Referring to FIG. 4 and FIG. 5, the rechargeable battery 102 according to the present embodiment includes an electrode assembly, a case 60 for housing the electrode assembly, a protective circuit module coupled to the top of the case 60, and a support member 62 coupled to the bottom of the case 60.

The rechargeable battery 102 according to the present embodiment has the same structure as the rechargeable battery according to the first embodiment, except for a support structure provided at the bottom of the case 60. Thus, repetitive description of the same structure will be omitted.

The case 60 as a flexible pouch type case, and the case 60 may be made of a synthetic resin film, or a laminate film formed of a synthetic resin film with a metal thin film inserted therein.

A protrusion 60a and a recess 60b positioned inside the protrusion 60a are formed on the bottom surface of the case 60. The protrusion 60a extends downwardly from the case 60 (i.e. away from the second end of the case 60), and extends along the bottom corner of the case 60. The protrusion 60a protrudes from three edges of the bottom surface of the case 60, and an opening with no protrusion is formed on one edge of the bottom surface of the case 60.

In this embodiment, the protrusion 60a is formed by bending a film material positioned at the bottom of the case 60. By pressing and flattening the center of the bottom at which a surplus portion is formed, the protrusion 60a is formed, and the recess 60b is formed inside the protrusion 60a.

In this embodiment, a buffer member 61 is inserted into the recess 60b. The buffer member 61 is formed in a longitudinal plate-like shape which extends in the lengthwise direction (y-axis direction of FIG. 4) of the bottom surface of the case 60. The buffer member 61 may be made of polymer which has elasticity so as to absorb an impact. Moreover, the buffer member 61 is a tape with an adhesive layer formed on one surface. Therefore, the buffer member 61 is stably attached to the case 60 and absorbs an impact an impact transferred to the case 60. In other embodiments, a buffer member 61 can be located between the support member 62 and the second end of the case 60 in other ways, with the buffer member 61 arranged to absorb impacts.

In this embodiment, a finishing tape 63 is attached to the bottom of the buffer member 61 to surround both side surfaces and the bottom surface of the case 60. The finishing tape 63 is attached to both of the side surfaces of the case 60 while partially surrounding a center portion of the buffer member 61, thereby stably fixing the buffer member 61. In other embodiments, the finishing tape 63 can be attached to an outside surface of the case 60 in a different way, with the finishing tape 63 located between the buffer member 61 and the support member 62. Such a finishing tape 63 is arranged to fix the buffer member 61 in place.

The support member 62 is provided on the bottom of the finishing tape 63. The support member 62 is a tape with an adhesive layer formed on one surface. The support member 62 is attached to the bottom surfaces of the finishing tape 63 and buffer member 61, and serves to maintain the shape of the case 60 and prevent the movement of the electrode assembly 10 provided within the case 60.

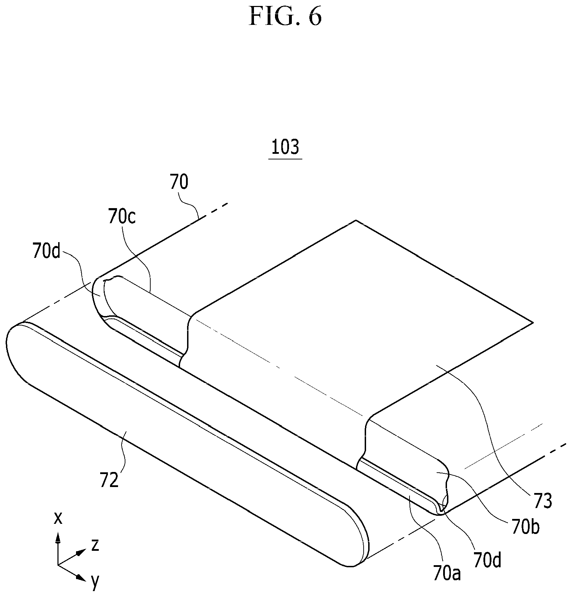

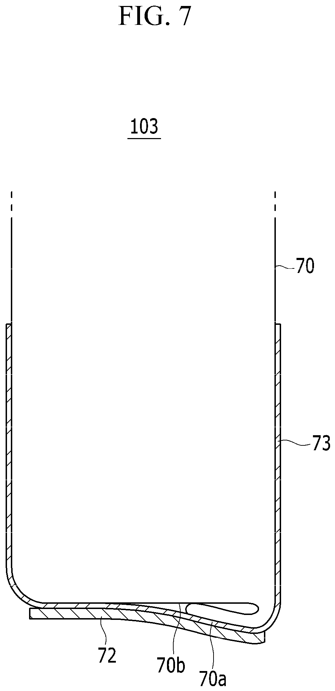

FIG. 6 is an exploded perspective view illustrating a part of a rechargeable battery according to a third embodiment of the present invention. FIG. 7 is a cross-sectional view of the rechargeable battery according to the third embodiment of the present invention.

Referring to FIG. 6 and FIG. 7, the rechargeable battery 103 according to the present embodiment includes an electrode assembly, a case 70 for housing the electrode assembly, a protective circuit module coupled to the top of the case 70, and a support member 72 coupled to the bottom of the case 70.

The rechargeable battery 103 according to the present embodiment has the same structure as the rechargeable battery according to the first embodiment, except for a support structure provided at the bottom of the case 70. Thus, repetitive description of the same structure will be omitted.

The case 70 as a flexible pouch type case, and the case 70 may be made of a synthetic resin film, or a laminate film formed of a synthetic resin film with a metal thin film inserted therein.

A protrusion and a recess 70b positioned inside the protrusion are formed on the bottom surface of the case 70. The protrusion includes a first protrusion formed by being bent from the bottom surface of the case 70 and a second protrusion 70d extending from both longitudinal ends of the first protrusion 70a and extending downwardly (i.e. away from the second end).

In this embodiment, the bottom surface of the case 70 has an approximately rectangular shape. The first protrusion 70a is formed on the lengthwise (y-axis directional) edge of the bottom surface of the case 70, and the second protrusion 70d is formed on the widthwise (x-axis directional) edge of the bottom surface of the case 70. Also, an opening 70c with no protrusion is formed on one edge of the bottom surface of the case 70.

The first protrusion 70a and the second protrusion 70d are formed by bending a film material positioned at the bottom of the case 70. By pushing and bending a surplus portion positioned at the bottom of the case 70 in the widthwise direction of the bottom surface, a protruding portion is formed on one edge. By bending the protruding portion, the first protrusion 70a is formed. Moreover, the second protrusion 70d is formed, being connected to both side ends of the first protrusion 70a, by pushing the surplus portion in both lengthwise directions of the bottom surface during the formation of the first protrusion 70a.

A recess 70b is formed inward of the protrusions. With the first protrusion 70a being formed, a finishing tape 73 is attached to surround both side surfaces and the bottom surface of the case 70. The finishing tape 73 is attached to both of the side surfaces of the case 70 while partially surrounding the first protrusion 70a, and then fixed to them such that the first protrusion 70a is kept bent.

The support member 72 is provided on the bottom of the finishing tape 73. The support member 72 is a tape with an adhesive layer formed on one surface. The support member 72 is attached to the bottom surfaces of the finishing tape 73 and case 70, and serves to maintain the shape of the case 70 and prevent the movement of the electrode assembly provided within the case 70.

Once the bent first protrusion 70a is formed and then the finishing tape 73 is provided, as in the present embodiment, the first protrusion 70a removes a surplus space, thereby preventing the movement of the electrode assembly.

Thus, in this embodiment, the protrusion portion is folded so that one side of the protrusion portion is adjacent the second end of the case, with the support member 72 adjacent an opposite side of the protrusion portion. Hence, the support member 72 maintains the shape of the case 70.

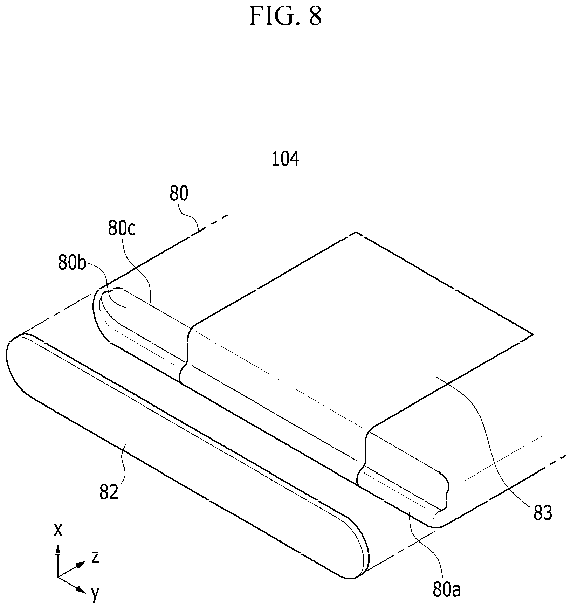

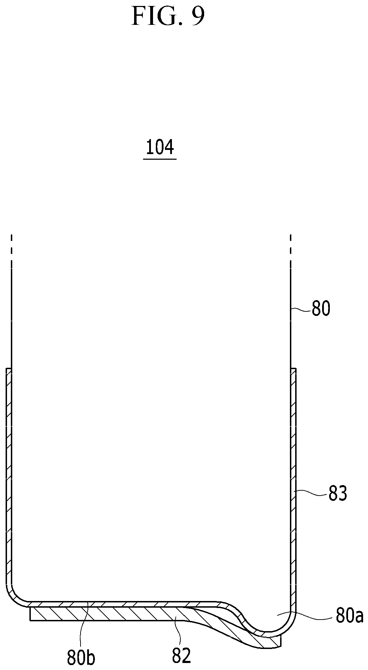

FIG. 8 is an exploded perspective view illustrating a part of a rechargeable battery according to a third embodiment of the present invention. FIG. 9 is a cross-sectional view of the rechargeable battery according to the fourth embodiment of the present invention.

Referring to FIG. 8 and FIG. 9, the rechargeable battery 104 according to the present embodiment includes an electrode assembly, a case 80 for housing the electrode assembly, a protective circuit module coupled to the top of the case 80, and a support member 82 coupled to the bottom of the case 80.

The rechargeable battery 104 according to the present embodiment has the same structure as the rechargeable battery according to the first embodiment, except for a support structure provided at the bottom of the case 80. Thus, repetitive description of the same structure will be omitted.

The case 80 as a flexible pouch type case, and the case 80 may be made of a synthetic resin film, or a laminate film formed of a synthetic resin film with a metal thin film inserted therein.

A protrusion 80a and a recess 80b positioned inside the protrusion 80a are formed on the bottom surface of the case 80. The protrusion 80a is protruded downward from the case 80, and extends along the bottom edge of the case 80. The protrusion 80a is protruded on three edges of the bottom surface of the case 80, and an opening 80c with no protrusion is formed on one edge of the bottom surface of the case 80.

The protrusion 80a is formed by bending a film material positioned at the bottom of the case 80. By pressing and flattening the center of the bottom at which a surplus portion is formed, the protrusion 80a is formed, and the recess 80b is formed inside the protrusion 80.

After the protrusion 80a is formed, a finishing tape 83 is attached to surround both side surfaces and the bottom surface of the case 80. The finishing tape 83 is attached to both of the side surfaces of the case 80 while partially surrounding the protrusion 80a, thereby maintaining the shape of the protrusion 80a.

The support member 82 is provided on the bottom of the finishing tape 83. The support member 82 is a tape with an adhesive layer formed on one surface. The support member 82 is attached to the bottom surfaces of the finishing tape 83 and case 80, and serves to maintain the shape of the case 70 and prevent the movement of the electrode assembly provided within the case 80.

As discussed above, embodiments of the invention provide a rechargeable battery that comprises a pouch type case, with an electrode assembly housed within the case. Electrode tabs are connected to the electrode assembly, with the electrode tabs protruding from a first end of the case. The battery is arranged such that a second end of the case (e.g. a bottom end of the case) comprises a recessed portion in the second end of the case. The battery further comprises a support member adjacent an outer surface of the second end of the case. The support member is arranged to maintain a shape of the second end of the case. Hence, the shape of the second end of the pouch type case is maintained by the presence of the support member. Therefore, the second end will be prevented from deforming if the rechargeable battery undergoes shocks, which helps to prevent short circuits.

In some embodiments, the recessed portion is arranged to prevent movement of the electrode assembly within the case. In some embodiments, the support member comprises is located in the recessed portion, and the support member can comprise a tape. The rechargeable battery can further comprise a protective circuit module adjacent the first end of the case, with the protective circuit module connected to the electrode tabs.

Some embodiments of the invention include a portion of the second end of the case that is folded to form a protrusion portion around at least one edge region of the second end of the case. However, it will be appreciated that a recessed portion in the second end of the case could be formed without such a protrusion portion. For example, the recess could be a broad depression with no distinct protrusion being formed. A finishing can be provided that is attached to an outside surface of the case, with the finishing tape being located between the second end of the case and the support member. Such a finishing tape can be provided to keep at least a portion of the protrusion portion folded.

In some embodiments, the rechargeable battery further comprises a buffer member located between the support member and the second end of the case, wherein the buffer member is arranged to absorb impacts. The buffer member can be located within the recessed portion, and can comprise a tape. A finishing tape can be attached to an outside surface of the case, the finishing tape being located between the buffer member and the support member. Such a finishing tape can fix the buffer member in place.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery, comprising:
a pouch type case (25, 60, 70, 80);
an electrode assembly (10) housed within the case (25, 60, 70, 80);
electrode tabs connected to the electrode assembly, the electrode tabs protruding from a first end of the case;
wherein a second end of the case comprises a recessed portion in the second end of the case;
wherein a portion of the second end of the case is folded to form a protrusion portion (25a, 60a, 70a, 80a) around at least one edge region of the second end of the case;
wherein the rechargeable battery further comprises a support member (42, 62, 72, 82) adjacent an outer surface of the second end of the case (25, 60, 70, 80), the support member (42, 62, 72, 82) arranged to maintain a shape of the second end of the case (25, 60, 70, 80);
**characterised in that** the rechargeable battery further comprises a finishing tape (73, 83) attached to an outside surface of the case (70, 80), wherein the finishing tape (73, 83) is located between the second end of the case (70, 80) and the support member (72, 82), wherein the finishing tape (73, 83) is arranged to keep at least a portion of the protrusion portion (70a, 80a) folded.

2. A rechargeable battery according to claim 1, wherein the recessed portion (25b, 60b, 70b, 80b) is arranged to prevent movement of the electrode assembly within the case.

3. A rechargeable battery according to claim 1 or 2, wherein the case (25, 60, 70, 80) comprises four sides, wherein the protrusion portion (25a, 60a, 70a, 80a) is formed around edge regions of three of the four sides of the second end of the case (25, 60, 70, 80).

4. A rechargeable battery according to any one of claims 1 to 3, wherein the protrusion portion (70a) is folded so that one side of the protrusion portion (70a) is adjacent the second end of the case, wherein the support member is adjacent an opposite side of the protrusion portion (70a).

5. A rechargeable battery according to any one of claims 1 to 4, wherein the recessed portion (25b, 60b, 70b, 80b) is arranged in a central region of second end of the case (25, 60, 70, 80) and extends to an edge region of the second end of the case (25, 60, 70, 80).

6. A rechargeable battery according to any preceding claim, wherein the support member (72, 82) is located within the recessed portion (70b, 80b).

7. A rechargeable battery according to any preceding claim, wherein the support member (42, 62, 72, 82) comprises a tape.

8. A rechargeable battery according to any preceding claim, further comprising:
a buffer member (41, 61) located between the support member (42, 62) and the second end of the case (40, 60), wherein the buffer member (41, 61) is arranged to absorb impacts.

9. A rechargeable battery according to claim 8, wherein the buffer member (41, 61) is located within the recessed portion (40b, 60b).

10. A rechargeable battery according to claim 8 or 9, wherein the buffer member (41, 61) comprises a tape.

11. A rechargeable battery according to any one of claims 8 to 10, further comprising a finishing tape (63) attached to an outside surface of the case (60), wherein the finishing tape (63) is located between the buffer member (61) and the support member (62), wherein the finishing tape (63) is arranged to fix the buffer member (61) in place.

12. A rechargeable battery according to any preceding claim, further comprising a protective circuit module (30) adjacent the first end of the case (25, 60, 70, 80), wherein the protective circuit module (30) is connected to the electrode tabs.

13. A rechargeable battery according to any preceding claim, wherein the case (25, 60, 70, 80) is made of a synthetic resin film, or a laminate film formed of a synthetic resin film with a metal thin film inserted therein.

## Patentansprüche

1. Wiederaufladbare Batterie, umfassend:
ein beutelartiges Gehäuse (25, 60, 70, 80);
eine Elektrodenanordnung (10), die in dem Gehäuse (25, 60, 70, 80) untergebracht ist;
Elektrodenstreifen, die mit der Elektrodenanordnung verbunden sind,
wobei die Elektrodenstreifen aus einem ersten Ende des Gehäuses heraus vorstehen;
wobei ein zweites Ende des Gehäuses einen zurückgesetzten Abschnitt in dem zweiten Ende des Gehäuses umfasst;
wobei ein Teil des zweiten Endes des Gehäuses gefaltet ist, um wenigstens einen Randbereich des zweiten Endes des Gehäuses herum einen Vorsprungsabschnitt (25a, 60a, 70a, 80a) auszubilden;
wobei die wiederaufladbare Batterie ferner benachbart zu einer Außenfläche des zweiten Endes des Gehäuses (25, 60, 70, 80) ein Stützelement (42, 62, 72, 82) umfasst, wobei das Stützelement (42, 62, 72, 82) dazu angeordnet ist, eine Form des zweiten Endes des Gehäuses (25, 60, 70, 80) aufrechtzuerhalten;
**dadurch gekennzeichnet, dass** die wiederaufladbare Batterie ferner ein Abschlussband (73, 83) umfasst, das an einer äußeren Oberfläche des Gehäuses (70, 80) angebracht ist, wobei das Abschlussband (73, 83) sich zwischen dem zweiten Ende des Gehäuses (70, 80) und dem Stützelement (72, 82) befindet, wobei das Abschlussband (73, 83) dazu angeordnet ist, wenigstens einen Teil des Vorsprungsabschnitts (70a, 80a) gefaltet zu halten.

2. Wiederaufladbare Batterie nach Anspruch 1, wobei der zurückgesetzte Abschnitt (25b, 60b, 70b, 80b) dazu angeordnet ist, eine Bewegung der Elektrodenanordnung innerhalb des Gehäuses zu verhindern.

3. Wiederaufladbare Batterie nach Anspruch 1 oder 2, wobei das Gehäuse (25, 60, 70, 80) vier Seiten umfasst, wobei der Vorsprungsabschnitt (25a, 60a, 70a, 80a) um Randbereiche dreier der vier Seiten des zweiten Endes des Gehäuses (25, 60, 70, 80) herum ausgebildet ist.

4. Wiederaufladbare Batterie nach einem der Ansprüche 1 bis 3, wobei der Vorsprungsabschnitt (70a) derart gefaltet ist, dass eine Seite des Vorsprungsabschnitts (70a) dem zweiten Ende des Gehäuses benachbart ist, wobei das Stützelement einer gegenüberliegenden Seite des Vorsprungsabschnitts (70a) benachbart ist.

5. Wiederaufladbare Batterie nach einem der Ansprüche 1 bis 4, wobei der zurückgesetzte Abschnitt (25b, 60b, 70b, 80b) in einem mittigen Bereich des zweiten Endes des Gehäuses (25, 60, 70, 80) angeordnet ist und sich zu einem Randbereich des zweiten Endes des Gehäuses (25, 60, 70, 80) erstreckt.

6. Wiederaufladbare Batterie nach einem vorangehenden Anspruch, wobei das Stützelement (72, 82) sich innerhalb des zurückgesetzten Abschnitts (70b, 80b) befindet.

7. Wiederaufladbare Batterie nach einem vorangehenden Anspruch, wobei das Stützelement (42, 62, 72, 82) ein Band umfasst.

8. Wiederaufladbare Batterie nach einem vorangehenden Anspruch, die ferner umfasst:
ein Pufferelement (41, 61), das sich zwischen dem Stützelement (42, 62) und dem zweiten Ende des Gehäuses (40, 60) befindet, wobei das Pufferelement (41, 61) dazu angeordnet ist, Stöße zu absorbieren.

9. Wiederaufladbare Batterie nach Anspruch 8, wobei das Pufferelement (41, 61) sich innerhalb des zurückgesetzten Abschnitts (40b, 60b) befindet.

10. Wiederaufladbare Batterie nach Anspruch 8 oder 9, wobei das Pufferelement (41, 61) ein Band umfasst.

11. Wiederaufladbare Batterie nach einem der Ansprüche 8 bis 10, die ferner ein Abschlussband (63) umfasst, das an einer äußeren Oberfläche des Gehäuses (60) angebracht ist, wobei das Abschlussband (63) sich zwischen dem Pufferelement (61) und dem Stützelement (62) befindet, wobei das Abschlussband (63) dazu angeordnet ist, das Pufferelement (61) in seiner Position festzuhalten.

12. Wiederaufladbare Batterie nach einem vorangehenden Anspruch, die ferner benachbart zu dem ersten Ende des Gehäuses (25, 60, 70, 80) ein Schutzschaltungsmodul (30) umfasst, wobei das Schutzschaltungsmodul (30) mit den Elektrodenstreifen verbunden ist.

13. Wiederaufladbare Batterie nach einem vorangehenden Anspruch, wobei das Gehäuse (25, 60, 70, 80) aus einer Kunstharzfolie oder einer Schichtfolie, die aus einer Kunstharzfolie mit einer in diese eingefügten metallischen Dünnschicht ausgebildet ist, gefertigt ist.

## Revendications

1. Batterie rechargeable, comprenant :
un boîtier de type poche (25, 60, 70, 80) ;
un ensemble d'électrodes (10) reçu à l'intérieur du boîtier (25, 60, 70, 80) ;
des languettes d'électrodes connectées à l'ensemble d'électrodes, les languettes d'électrodes faisant saillie à partir d'une première extrémité du boîtier ;
dans laquelle une deuxième extrémité du boîtier comprend une partie en retrait dans la deuxième extrémité du boîtier ;
dans laquelle une partie de la deuxième extrémité du boîtier est pliée pour former une partie en saillie (25a, 60a, 70a, 80a) autour d'au moins une région de bord de la deuxième extrémité du boîtier ;
dans laquelle la batterie rechargeable comprend en outre un élément de support (42, 62, 72, 82) adjacent à une surface externe de la deuxième extrémité du boîtier (25, 60, 70, 80), l'élément de support (42, 62, 72, 82) étant agencé pour maintenir une forme de la deuxième extrémité du boîtier (25, 60, 70, 80) ;
**caractérisée en ce que** la batterie rechargeable comprend en outre une bande de finition (73, 83) attachée à une surface extérieure du boîtier (70, 80), dans laquelle la bande de finition (73, 83) est située entre la deuxième extrémité du boîtier (70, 80) et l'élément de support (72, 82), dans laquelle la bande de finition (73, 83) est agencée pour maintenir au moins une partie de la partie en saillie (70a, 80a) pliée.

2. Batterie rechargeable selon la revendication 1, dans laquelle la partie en retrait (25b, 60b, 70b, 80b) est agencée pour empêcher le mouvement de l'ensemble d'électrodes à l'intérieur du boîtier.

3. Batterie rechargeable selon la revendication 1 ou 2, dans laquelle le boîtier (25, 60, 70, 80) comprend quatre côtés, dans laquelle la partie en saillie (25a, 60a, 70a, 80a) est formée autour de régions de bord de trois des quatre côtés de la deuxième extrémité du boîtier (25, 60, 70, 80).

4. Batterie rechargeable selon l'une quelconque des revendications 1 à 3, dans laquelle la partie en saillie (70a) est pliée de sorte qu'un côté de la partie en saillie (70a) soit adjacent à la deuxième extrémité du boîtier, dans laquelle l'élément de support est adjacent à un côté opposé de la partie en saillie (70a).

5. Batterie rechargeable selon l'une quelconque des revendications 1 à 4, dans laquelle la partie en retrait (25b, 60b, 70b, 80b) est agencée dans une région centrale de la deuxième extrémité du boîtier (25, 60, 70, 80) et s'étend jusqu'à une région de bord de la deuxième extrémité du boîtier (25, 60, 70, 80).

6. Batterie rechargeable selon l'une des revendications précédentes, dans laquelle l'élément de support (72, 82) est situé à l'intérieur de la partie en retrait (70b, 80b).

7. Batterie rechargeable selon l'une des revendications précédentes, dans laquelle l'élément de support (42, 62, 72, 82) comprend une bande.

8. Batterie rechargeable selon l'une des revendications précédentes, comprenant en outre :
un élément amortisseur (41, 61) situé entre l'élément de support (42, 62) et la deuxième extrémité du boîtier (40, 60), dans laquelle l'élément amortisseur (41, 61) est agencé pour absorber les chocs.

9. Batterie rechargeable selon la revendication 8, dans laquelle l'élément amortisseur (41, 61) est situé à l'intérieur de la partie en retrait (40b, 60b).

10. Batterie rechargeable selon la revendication 8 ou 9, dans laquelle l'élément amortisseur (41, 61) comprend une bande.

11. Batterie rechargeable selon l'une quelconque des revendications 8 à 10, comprenant en outre une bande de finition (63) attachée à une surface extérieure du boîtier (60), dans laquelle la bande de finition (63) est située entre l'élément amortisseur (61) et l'élément de support (62), dans laquelle la bande de finition (63) est agencée pour fixer l'élément amortisseur (61) en place.

12. Batterie rechargeable selon l'une des revendications précédentes, comprenant en outre un module de circuit de protection (30) adjacent à la première extrémité du boîtier (25, 60, 70, 80), dans laquelle le module de circuit de protection (30) est connecté aux languettes d'électrodes.

13. Batterie rechargeable selon l'une des revendications précédentes, dans laquelle le boîtier (25, 60, 70, 80) est constitué d'un film de résine synthétique ou d'un film stratifié formé d'un film de résine synthétique avec un film métallique mince inséré dedans.
